Europäisches Patentamt

European Patent Office

Office européen des brevets

(19)

(11) Veröffentlichungsnummer: **0 073 517**
**B1**

(12) **EUROPÄISCHE PATENTSCHRIFT**

(45) Veröffentlichungstag der Patentschrift:
24.07.85

(21) Anmeldenummer: 82107977.9

(22) Anmeldetag: 31.08.82

(51) Int. Cl.⁴: **C 08 L 75/06**, C 08 G 18/68,
C 09 D 3/00, C 09 D 3/72,
C 08 G 18/30, C 08 J 3/02

(54) **Wässrige Dispersionen auf der Basis eines Polyurethankunstharzes.**

(30) Priorität: 02.09.81 DE 3134721

(43) Veröffentlichungstag der Anmeldung:
09.03.83 Patentblatt 83/10

(45) Bekanntmachung des Hinweises auf die Patenterteilung:
24.07.85 Patentblatt 85/30

(84) Benannte Vertragsstaaten:
AT BE CH DE FR GB IT LI NL SE

(56) Entgegenhaltungen:
BE - A - 686 378
DE - A - 1 495 745
US - A - 3 983 058
US - A - 4 183 836

(73) Patentinhaber: BASF Farben + Fasern
Aktiengesellschaft, Am Neumarkt 30,
D-2000 Hamburg 70 (DE)

(72) Erfinder: Hille, Hans-Dieter, In der Schlage 24,
D-5060 Bergisch-Gladbach (DE)
Erfinder: Brose, Horst, Am Klosterwald 10a,
D-4400 Münster (DE)
Erfinder: Dobbelstein, Arnold, Dr., Emil-Nolde-Weg 95,
D-4400 Münster (DE)

(74) Vertreter: Habbel, Hans-Georg, Dipl.-Ing.,
Postfach 3429 Am Kanonengraben 11, D-4400 Münster
(DE)

**Beschreibung**

Die Erfindung betrifft gattungsgemäss wässrige Dispersionen auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist.

Derartige wässrige Dispersionen sind bekannt. In der DE-OS 1 495 745 wird ein Verfahren zur Herstellung wässriger, emulgatorfreier Polyurethanlatices auf der Grundlage von aus Polyhydroxylverbindungen, Polyisocyanaten und gegebenenfalls Kettenverlängerungsmitteln hergestellten Polyurethanmassen beschrieben.

Die bisher bekannten gattungsgemässen Dispersionen weisen den Nachteil auf, dass sie bei physikalischer Trocknung ohne Härterzusatz keine lösungsmittelbeständigen Überzüge liefern. Insbesondere gegenüber Aceton aber auch gegenüber anderen Lösungsmitteln sind die Überzüge empfindlich, was ihren Gebrauchswert stark mindert.

Es ist Aufgabe der Erfindung, diesen Nachteil des Standes der Technik zu vermeiden und wässrige Dispersionen auf der Basis von Polyurethankunstharz sowie ein Verfahren ihrer Herstellung anzugeben, die ohne Härtezusatz zu lösungsmittelbeständigen Überzügen aushärten.

Überraschenderweise wurde nun gefunden, dass diese Aufgabe durch Dispersionen der in Rede stehenden Art gelöst werden kann, wenn diese als Bindemittel ein Polyurethankunstharz enthalten, das als wesentlichen Baustein eine ungesättigte Polyesterkomponente enthält.

Gegenstand der Erfindung sind also wässrige Dispersionen auf der Basis eines Polyurethankunstharzes, die dadurch gekennzeichnet sind, dass das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenproduktes mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukt, wobei die zur Anionenbildung befähigten Gruppen vor der Umsetzung mit einem tertiären Amin neutralisiert worden sind, Überführung des zweiten Zwischenprodukts in eine überwiegend wässrige Phase und Umsetzung der Isocyanatgruppen des zweiten Zwischenprodukts mit einem Di- uns/oder Polyamin mit primären und/oder sekundären Aminogruppen erhalten worden ist.

Unter dem Begriff Polyester werden Polykondensate aus Polyolen und Polycarbonsäuren, insbesondere lineare Polykondensate aus einem Diol- und einer Dicarbonsäure verstanden. Ungesättigte Polyester sind derartige Kondensate mit Doppelbindungen insbesondere in der Hauptkette des Moleküls. Hierbei können die Doppelbindungen aus dem Diol und/oder der Dicarbonsäure stammen, wobei Polyester bevorzugt werden, deren Doppelbindungen aus der Dicarbonsäure stammen. Geeignete Diole für die Herstellung der Polyester sind beispielsweise Ethylenglykol und seine Homologen, Neopentylglykol, 2--Methyl-2-Ethylpropandiol-1,3, Cyclohexandiol und dergleichen.

Als Dicarbonsäure sind beispielsweise Maleinsäure bzw. ihr Anhydrid, Fumarsäure, Citraconsäre, Mesaconsäure oder auch Itaconsäure geeignet. Zusammen mit diesen ungesättigten Dicarbonsäuren werden auch gesättigte Dicarbonsäuren wie Glutarsäure, Pimelinsäure, Azellainsäure, Sebazinsäure und insbesondere Adipinsäure verwendet. Es werden Polyester bevorzugt, die aus Maleinsäureanhydrid als ungesättigtem Dicarbonsäurebaustein aufgebaut sind und ein Molekulargewicht von 500 bis 2000 aufweisen.

Bei dem Polyester zur Herstellung des Polyurethankunstharzes kann es sich also um einen ungesättigten Polyester oder ein Gemisch eines ungesättigten Polyesters mit einem linearen Diol handeln. Wesentlich ist, dass die Gesamtmenge an Polyester bzw. Gemisch pro 1000 Molekulargewichtseinheiten mindestens 0,4 olefinisch ungesättigte Doppelbindungen enthält.

Geeignete lineare Diole sind beispielsweise gesättigte hydroxylgruppenhaltige Polyester, Polyether, Polyesteramide, Polyacetale und dergleichen.

Als Diisocyanate kommen insbesondere aliphatische und cycloaliphatische Diisocyanate in Betracht. Es sind auch höherfunktionelle Polyisocyanate geeignet, wenn man dafür sorgt, dass keine vorzeitige Vernetzung eintritt. Geeignete Diisocyanate sind beispielsweise Hexamethylendiisocyanat, Trimethylhexamethylendiisocyanat, 2,6-Diisocyanatomethyl-capronat, 4,4'-Dicyclohexylmethandiisocyanat und Isophorondiisocyanat.

Die Umsetzung des Polyesters mit dem Diisocyanat wird so durchgeführt, dass das entstehende erste Zwischenprodukt endständige Isocyanatgruppen aufweist, d.h. bezogen auf 1 Mol Polyester werden etwa 2 Mol Diisocyanat eingesetzt.

Erfindungsgemäss werden Verbindungen verwendet, die mindestens 2 mit Isocyanatgruppen reagierende Gruppen und mindestens eine zur Anionenbildung befähigte Gruppe enthalten. Geeignete mit Isocyanatgruppen reagierende Gruppen sind insbesondere Hydroxylgruppen und primäre und sekundäre Aminogruppen. Als zur Anionenbildung befähigte Gruppen kommen Carboxyl- und Sulfonsäuregruppen in Betracht. Diese Gruppen werden vor der Umsetzung mit einem tertiären Amin neutralisiert, um eine Reaktion mit den Isocyanatgruppen zu vermeiden. Die Umsetzung wird so durchgeführt, dass ein zweites Zwischenprodukt mit endständigen Isocyanatgruppen entsteht. Die Molmengen der Reaktionspartner werden also so gewählt, dass das erste Zwischenprodukt im Überschuss vorliegt.

Als Verbindung, die mindestens 2 mit Isocyanatgruppen reagierende Gruppen und mindestens 1 zur Anionenbildung befähigte Gruppe enthält, sind beispielsweise Dihydroxypropionsäure, Dimethylolpropionsäure, Dihydroxybernsteinsäure oder Dihydroxybenzoesäure geeignet. Geeignet sind auch die durch Oxydation von Monosacchariden zugänglichen Polyhydroxysäure, z.B. Glukonsäure, Zuckersäure, Schleimsäure und Glukuronsäure.

Aminogruppenhaltige Verbindungen sind beispielsweise $\alpha,\delta$-Diaminovaleriansäure, 3,4-Diaminobenzoesäure, 2,4'-Diamino-toluol-sulfonsäure-(5) und 4,4'-Diamino-diphenylether-sulfonsäure.

Das zweite Zwischenprodukt weist anionische Gruppen auf, die mit einem tertiären Amin neutralisiert werden. Geeignete tertiäre Amine sind beispielsweise Trimethylamin, Triethylamin, Dimethylanilin, Diethylanilin und Triphenylamin.

Nach Überführung des zweiten Zwischenprodukts in eine wässrige Phase werden die endständigen Isocyanatgruppen mit einem primären oder sekundären Diamin als Kettenverlängerungsmittel zu N-Alkylharnstoffgruppen umgesetzt. Hierfür geeignete Diamine sind beispielsweise Ethylendiamin, Diaminopropan, Hexamethylendiamin, Hydrazin, Aminoethylethanolamin und dergleichen. Die Umsetzung mit dem Diamin führt zu einer weiteren Verknüpfung und Erhöhung des Molekulargewichts.

Die Erfindung betrifft auch ein Verfahren zur Herstellung von wässrigen Dispersionen auf der Basis eines Polyurethankunstharzes, bei dem ein hydroxylgruppenhaltiger Polyester mit einem Diisocyanat zu einem ersten Zwischenprodukt umgesetzt wird und dieses mit einer Verbindung, die mindestens zwei mit Isocyanatgruppen reagierende und mindestens eine zur Anionenbildung befähigte Gruppe enthält, und einem Kettenverlängerungsmittel weiter umgesetzt wird. Das erfindungsgemässe Verfahren ist dadurch gekennzeichnet, dass ein ungesättigter Polyester oder ein Gemisch eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt umgesetzt wird, dieses mit der Verbindung, die mindestens zwei mit Isocyanatgruppen reagierende Gruppen und mindestens eine zur Anionenbildung befähigte Gruppe enthält, zu einem endständige Isocyanatgruppen aufweisenden zweiten Zwischenprodukt umgesetzt wird, wobei die zur Anionenbildung befähigten Gruppen vor der Umsetzung mit einem tertiären Amin neutralisiert worden sind, das zweite Zwischenprodukt in eine überwiegend wässrige Phase überführt und die Isocyanatgruppen des zweiten Zwischenprodukts mit einem Di- und/oder Polyamin mit primären und/oder sekundären Aminogruppen umgesetzt werden.

Vorteilhaft wird als ungesättigter Polyester ein Polyester aus Maleinsäureanhydrid und einem Diol verwendet.

Vorteilhaft wird ein aliphatisches oder cycloaliphatisches Diisocyanat verwendet.

Als Verbindung, die mindestens zwei mit Isocyanatgruppen reagierende Gruppen und mindestens eine zur Anionenbildung befähigte Gruppe enthält, werden vorteilhaft Dihydroxycarbonsäure, Dihydroxysulfonsäuren, Diaminocarbonsäuren oder Diaminosulfonsäuren verwendet.

Die Erfindung betrifft weiterhin ein Verfahren zur Herstellung von Überzügen durch Aufbringen einer wässrigen Dispersion auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist, auf ein Substrat und anschliessendes Aushärten der aufgebrachten Dispersion, dadurch gekennzeichnet, dass das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenprodukts mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukt, wobei die zur Anionenbildung befähigten Gruppen vor der Umsetzung mit einem tertiären Amin neutralisiert worden sind, Überführung des zweiten Zwischenprodukts in eine überwiegend wässrige Phase und Umsetzung der Isocyanatgruppen des zweiten Zwischenprodukts mit einem Di- und/oder Polyamin mit primären und/oder sekundären Aminogruppen erhalten worden ist.

Die erfindungsgemässen Dispersionen, die lagerstabil sind, können Pigmente und übliche Additive wie z.B. Mattierungsmittel, Verlaufhilfsmittel, Verdickungsmittel usw. enthalten. Sie können durch Spritzen, Fluten, Tauchen, Walzen, Rakeln, Giessen, Bürsten, Streichen oder dergleichen auf beliebige Substrate wie Holz, Papier, Metall, mineralische Untergründe, Kunststoffe wie z.B. Polyvinylchlorid, Glas und dergleichen aufgebracht werden. Bei Raumtemperaturen härtet der aufgebrachte Film innerhalb von etwa 24 Stunden zu einem lösungsmittelbeständigen Überzug aus. Durch erhöhte Temperaturen ergeben sich verkürzte Trockenzeiten. So härtet ein mit einer Nassfilmdicke von 30 $\mu$m aufgetragener Film bei 60°C in 10 Minuten und bei 180°C in 3 Sekunden aus. Die Lösungsmittelbeständigkeit der erhaltenen Überzüge ist sehr gut. So ist ein mit 30 $\mu$m Nassfilmdicke beschichtetes Papier nach 8 Tagen Lagerung beständig gegen Wasser, Methanol, benzin, Essig, Ethanol, Olivenöl, Cola-Getränke, Tee, Kaffee, Südwein, Bier, Johannisbeersaft, Kondensmilch, Zitronensäure und Kochsalzlösung. Bei Aufkleben und Abreissen eines Klebefilms tritt keine Enthaftung zum Substrat auf.

Im folgenden wird die Erfindung anhand von Beispielen näher erläutert. Die in den Beispielen genannten Prozente beziehen sich auf das Gewicht.

## Beispiel 1

787 g eines Polyesters aus Neopentylglykol und Maleinsäureanhydrid mit einer Hydroxylzahl von 173 und einer Säurezahl von 2 werden zusammen mit 939 g eines Polyesters aus Adipinsäure und Neopentylglykol mit einer Hydroxylzahl von 98 und einer Säurezahl von 3 auf 100°C erhitzt und in Vakuum entwässert. bei 80°C werden 1048 g 4,4'-Dicyclohexylmethandiisocyanat zugegeben. Es wird 1 Stunde bei 90°C gerührt. Der NCO-Gehalt beträgt hiernach 5,93%. Nach Abkühlen auf 60°C wird eine Lösung von 134 g Dimethylolpropionsäure und 102 g Triethylamin in 800 g N-Methylpyrrolidon hinzugegeben und 1 Stunde bei 90°C gerührt. Die erhaltene Masse wird unter intensivem Rühren in 4000 g kaltes Wasser gegeben. Man erhält eine feinteilige Dispersion. Bei 40°C werden unter intensivem Rühren innerhalb von 20 Min. 160 g einer 30%igen wässrigen Lösung von Ethylendiamin hinzugegeben. Man erhält eine Dispersion mit einem Festkörpergehalt von 37 Gew.-% und einer Auslaufzeit von 27 Sekunden im DIN-Becher 4. Die Dispersion wird auf eine Glasplatte aufgetragen; nach 24 Stunden bei Raumtemperatur ergibt sich ein lösungsmittelbeständiger, harter Lackfilm.

## Beispiel 2

896 g eines Polyesters aus Neopentylglykol, Maleinsäureanhydrid und Adipinsäure mit einem Molverhältnis Maleinsäureanhydrid zu Adipinsäure = 1:1, einer Hydroxylzahl von 125 und einer Säurezahl von 3 werden bei 100°C in Vakuum entwässert. Bei 80°C werden 524 g Dicyclohexylmethandiisocyanat zugegeben. Es wird 1 Stunde bei 90°C gerührt. Der NCO-Gehalt beträgt hiernach 5,48%. Es wird eine Lösung von 67 g Dimethylolpropionsäure und 51 g Triethylamin in 500 g N-Methylpyrrolidon zugegeben. Es wird 1 Stunde bei 90°C gerührt. Die Masse wird unter intensivem Rühren in 2200 g kaltes Wasser gegeben. Es ergibt sich eine sehr feinteilige Dispersion. Innerhalb von 20 Min. werden bei 40°C 80 g einer 30%igen wässrigen Lösung von Ethylendiamin zugegeben. Man erhält eine Dispersion mit einem Festkörpergehalt von 35 Gew.-% und einer Auslaufzeit im DIN-Becher 4 von 21 Sekunden. Die Dispersion wird auf eine Glasplatte aufgetragen und ergibt nach 24 Stunden bei Raumtemperatur einen harten, lösungsmittelbeständigen Film.

## Patentansprüche

1. Wässrige Dispersionen auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist, dadurch gekennzeichnet, dass das Polyurethankunstharz durch Umsetzung eines ungesättigten Polyesters oder eines Gemisches eines ungesättigten Polysters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenprodukts mit der Verbindung, die mindestens zwei mit Isocyanatgruppen reagierende und mindestens eine zur Anionenbildung befähigte Gruppe enthält, zu einem endständige Isocyanatgruppen aufweisenden zweiten Zwischenprodukt, wobei die zur Anionenbildung befähigten Gruppen vor der Umsetzung mit einem tertiären Amin neutralisiert worden sind, Überführung des zweiten Zwischenprodukts in eine überwiegend wässrige Phase und Umsetzung der Isocyanatgruppen des zweiten Zwischenprodukts mit einem Di- und/oder Polyamin mit primären und/oder sekundären Aminogruppen erhalten worden ist.

2. Dispersionen nach Anspruch 1, dadurch gekennzeichnet, dass als ungesättigter Polyester ein Polyester aus Maleinsäureanhydrid und einem Diol verwendet worden ist.

3. Dispersionen nach Anspruch 1 oder 2, dadurch gekennzeichnet, dass ein aliphatisches und/oder cycloaliphatisches Diisocyanat verwendet worden ist.

4. Dispersionen nach Anspruch 1 bis 3, dadurch gekennzeichnet, dass als Verbindung, die mindestens zwei mit Isocyanatgruppen reagierende Gruppen und mindestens eine zur Anionenbildung befähigte Gruppe enthält, eine Dihydroxycarbonsäure oder eine Dihydroxysulfonsäure verwendet worden ist.

5. Dispersionen nach Anspruch 1 bis 3, dadurch gekennzeichnet, dass als Verbindung, die mindestens zwei mit Isocyanatgruppen reagierende Gruppen und mindestens eine zur Anionenbildung befähigte Gruppe enthält, eine Diaminocarbonsäure oder eine Diaminosulfonsäure verwendet worden ist.

6. Verfahren zur Herstellung von wässrigen Dispersionen auf der Basis eines Polyurethankunstharzes, bei dem ein hydroxylgruppenhaltiger Polyester mit einem Diisocyanat zu einem ersten Zwischenprodukt umgesetzt wird und dieses mit einer Verbindung, die mindestens zwei mit Isocyanatgruppen reagierende Gruppen und mindestens eine zur Anionenbildung befähigte Gruppe enthält, und einem Kettenverlängerungsmittel weiter umgesetzt wird, dadurch gekennzeichnet, dass ein ungesättigter Polyester oder ein Gemisch eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt umgesetzt wird, dieses mit der Verbindung, die mindestens zwei mit Isocyanatgruppen reagierende Gruppen und mindestens eine zur Anionenbildung befähigte Gruppe enthält, zu einem endständige Isocyanatgruppen aufweisenden zweiten Zwischenprodukt umgesetzt wird, wobei die zur Anionenbildung befähigten Gruppen vor der Umsetzung mit einem tertiären Amin neutralisiert worden sind, das zweite Zwischenprodukt in eine überwiegend wässrige Phase überführt wird und die Isocyanatgruppen des zweiten Zwischenprodukts mit einem Di- und/oder Polyamin mit primären und/oder sekundären Aminogruppen umgesetzt wird.

7. Verfahren nach Anspruch 6, dadurch gekennzeichnet, dass als ungesättigter Polyester ein Polyester aus Maleinsäureanhydrid und einem Diol verwendet wird.

8. Verfahren nach Anspruch 6 oder 7, dadurch gekennzeichnet, dass ein aliphatisches oder cycloaliphatisches Diisocyanat verwendet wird.

9. Verfahren nach Anspruch 6 bis 8, dadurch gekennzeichnet, dass als Verbindung, die mindestens zwei mit Isocyanatgruppen reagierende Gruppen und mindestens eine zur Anionenbildung befähigte Gruppe enthält, eine Dihydroxycarbonsäure oder eine Dihydroxysulfonsäure verwendet wird.

10. Verfahren nach Anspruch 6 bis 8, dadurch gekennzeichnet, dass als Verbindung, die mindestens zwei mit Isocyanatgruppen reagierende Gruppen und mindestens eine zur Anionenbildung befähigte Gruppe enthält, eine Diaminocarbonsäure oder eine Diaminosulfonsäure verwendet wird.

11. Verfahren zur Herstellung von Überzügen durch Aufbringen einer wässrigen Dispersion auf der Basis eines Polyurethankunstharzes, das durch Umsetzung eines hydroxylgruppenhaltigen Polyesters mit einem Diisocyanat und weitere Umsetzung mit einer Verbindung, die mindestens zwei mit Isocyanatgruppen reagierende und mindestens eine zur Anionenbildung befähigte Gruppe enthält, und einem Kettenverlängerungsmittel erhalten worden ist, auf ein Substrat und anschliessendes Aushärten der aufgebrachten Dispersion, dadurch gekennzeichnet, dass das Polyurethankunstharz durch Umsetzung eines ungesättigten Polyesters oder eines Gemisches eines ungesättigten Polyesters und eines linearen Diols mit einem Molekulargewicht von 500 bis 2000, wobei der Polyester bzw. das Gemisch pro 1000 Molekulargewichtseinheiten mindestens 0,4 olefinisch ungesättigte Doppelbindungen enthält, mit dem Diisocyanat zu einem endständige Isocyanatgruppen aufweisenden ersten Zwischenprodukt, Umsetzung dieses Zwischenprodukts mit der Verbindung, die mindestens zwei mit Isocyanatgruppen reagierende und mindestens eine zur Anionenbildund befähigte Gruppe enthält, zu einem endständige Isocyanatgruppen aufweisenden zweiten Zwischenprodukt, wobei die zur Anionenbildung befähigten Gruppen vor der Umsetzung mit einem tertiären Amin neutralisiert worden sind, Überführung des zweiten Zwischenprodukts in eine überwiegend wässrige Phase und Umsetzung der Isocyanatgruppen des zweiten Zwischenprodukts mit einem Di- und/oder Polyamin mit primären und/oder sekundären Aminogruppen erhalten worden ist.

12. Verfahren nach Anspruch 11, dadurch gekennzeichnet, dass als ungesättigter Polyester ein Polyester aus Maleinsäureanhydrid und einem Diol verwendet worden ist.

13. Verfahren nach Anspruch 11 oder 12, dadurch gekennzeichnet, dass ein aliphatisches und/oder cycloaliphatisches Diisocyanat verwendet worden ist.

14. Verfahren nach Anspruch 11 bis 13, dadurch gekennzeichnet, dass als Verbindung, die mindestens zwei mit Isocyanatgruppen reagierende Gruppen und mindestens eine zur Anionenbildung befähigte Gruppe enthält, eine Dihydroxycarbonsäure oder eine Dihydroxysulfonsäure verwendet worden ist.

15. Verfahren nach Anspruch 11 bis 13, dadurch gekennzeichnet, dass als Verbindung, die mindestens zwei mit Isocyanatgruppen reagierende Gruppen und mindestens eine zur Anionenbildung befähigte Gruppe enthält, eine Diaminocarbonsäure oder eine Diaminosulfonsäure verwendet worden ist.

**Claims**

1. An aqueous dispersion based on a polyurethane synthetic resin obtained by reaction of a hydroxyl-containing polyester with a diisocyanate und further reaction with a compound containing at least two groups reacting with isocyanate groups and at least one group capable of anion formation and a chain-lengthening agent, in which the polyurethane synthetic resin has been obtained by reaction of an unsaturated polyester or a mixture of an unsaturated polyester and a linear diol having a molecular weight of 500 to 2,000, with the polyester, or the mixture, containing at least 0.4 olefinically unsaturated double bond per 1,000 molecular weight units, with the diisocyanate to give a first intermediate product having terminal isocyanate groups, reaction of this intermediate product with the compound containing at least two groups reacting with isocyanate groups and at least one group capable of anion formation to give a second intermediate product having terminal isocyanate groups, the groups capable of anion formation having been neutralized with a tertiary amine before the reaction, transfer of the second intermediate product into a predominantly aqueous phase, and reaction of the isocyanate groups of the second intermediate product with a diamine and/or polyamide having primary and/or secondary amino groups.

2. A dispersion as claimed in claim 1, wherein the unsaturated polyester used was a polyester of maleic anhydride and a diol.

3. A dispersion as claimed in claim 1 or 2, wherein an aliphatic and/or cycloaliphatic diisocyanate has been used.

4. A dispersion as claimed in claim 1 to 3, wherein a dihydroxycarboxylic acid or a dihydroxysulfonic acid has been used as the compound containing at least two groups reacting with isocyanate groups and at least one group capable of anion formation.

5. A dispersion as claimed in claim 1 to 3, wherein a diaminocarboxylic acid or a diaminosulfonic acid has been used as the compound containing at least two groups reacting with isocyanate groups and at least one group capable of anion formation.

6. A process for preparing aqueous dispersions based on a polyurethane synthetic resin, in which a hydroxyl-containing polyester is reacted with a diisocyanate to give a first intermediate product and the latter is further reacted with a compound containing at least two groups reacting with isocyanate groups and at least one group capable of anion formation and a chain-lengthening agent, wherein an unsaturated polyester or a mixture of an unsaturated polyester and a linear diol having a molecular weight of 500 to 2,000, the polyester or the mixture containing at least 0.4 olefinically unsaturated double bond per 1,000 molecular weight units, is reacted with the diisocyanate to give a first intermediate product having terminal isocyanate groups, this intermediate products is reacted with the compound containing at least two groups reacting with isocyanate groups and at least one group capable of anion formation to give a second intermediate product having terminal isocyanate groups, the groups capable of anion formation having been neutralized with a tertiary amine before the reaction, the second intermediate product is transferred into a predominantly aqueous phase, and the isocyanate groups of the second intermediate product are reacted with a diamine and/or polyamine having primary and/or secondary amino groups.

7. A process as claimed in claim 6, wherein the unsaturated polyester used is a polyester of maleic anhydride and a diol.

8. A process as claimed in claim 6 or 7, wherein an aliphatic or cycloaliphatic diisocyanate is used.

9. A process as claimed in claim 6 to 8, wherein a dihydroxycarboxylic acid or a dihydroxysulfonic acid is used as the compound containing at least two groups reacting with isocyanate groups and at least one group capable of anion formation.

10. A process as claimed in claim 6 to 8, wherein a diaminocarboxylic acid or a diaminosulfonic acid is used as the compound containing at least two groups reacting with isocyanate groups and at least one group capable of anion formation.

11. A process for preparing coatings by applying an aqueous dispersion based on a polyurethane synthetic resin obtained by reaction of a hydroxyl-containing polyester with a diisocyanate and further reaction with a compound containing at least two groups reacting with isocyanate groups and at least one group capable of anion formation and a chain-lengthening agent to a substrate and subsequent hardening of the dispersion applied, wherein the polyurethane synthetic resin has been obtained by reaction of an unsaturated polyester or a mixture of an unsaturated polyester and a linear diol having a molecular weight of 500 to 2,000, with the polyester, or the mixture, containing at least 0.4 olefinically unsaturated double bond per 1,000 molecular weight units, with the diisocyanate to give a first intermediate product having terminal isocyanate groups, reaction of this intermediate product with the compound containing at least two groups reacting with isocyanate groups and at least one group capable of anion formation to give a second intermediate product having terminal isocyanate groups, the groups capable of anion formation having been neutralized with a tertiary amine before the reaction, transfer of the second intermediate product into a predominantly aqueous phase, and reaction of the isocyanate groups of the second intermediate product with a diamine and/or polyamine having primary and/or secondary amino groups.

12. A process as claimed in claim 11, wherein the unsaturated polyester used was a polyester of maleic anhydride and a diol.

13. A process as claimed in claim 11 or 12, wherein an aliphatic and/or cycloaliphatic diisocyanate has been used.

14. A process as claimed in claim 11 to 13, wherein a dihydroxycarboxylic acid or a didydroxysulfonic acid has been used as the compound containing at least two groups reacting with isocyanate groups and at least one group capable of anion formation.

15. A process as claimed in claim 11 to 13, wherein a diaminocarboxylic acid or a diaminosulfonic acid has been used as the compound containing at least two groups reacting with isocyanate groups and at least one group capable of anion formation.

## Revendications

1. Dispersions aqueuses à base d'une résine synthétique de polyuréthane qui a été obtenue par réaction d'un polyester à groupes hydroxyle sur un diisocyanate et ensuite réaction sur un composé qui contient au moins deux groupes réagissant sur les groupes isocyanate et au moins un groupe capable de former un anion, et sur un agent d'allongement de chaîne, caractérisées par le fait que la résine synthetique de polyuréthane a été obtenue par réaction d'un polyester insaturé ou d'un mélange d'un polyester insaturé et d'un diol linéaire d'un poids moléculaire de 500 à 2000, le polyester ou le mélange contenant par 1000 unités de poids moléculaire au moins 0,4 double liaison à insaturation oléfinique, sur le diisocyanate, avec formation d'un premier produit intermédiaire présentant des groupes isocyanate terminaux, réaction de ce produit intermédiaire sur le composé qui contient au moins deux groupes réagissant sur les groupes isocyanate et au moins un groupe capable de former un anion, avec formation d'un deuxième produit intermédiaire présentant des groupes isocyanate terminaux, les groupes capables de former un anion ayant été neutralisés, avant la réaction, par une amine tertiaire, conversion du deuxième produite intermédiaire en une phase principalement aqueuse et réaction des groupes isocyanate du deuxième produit intermédiaire sur une di- et/ou polyamine à groupes amine primaires et/ou secondaires.

2. Dispersions selon la revendication 1, caractérisées par le fait que comme polyester insaturé, on a utilisé un polyester tiré d'anhydride maléique et d'un diol.

3. Dispersions selon l'une des revendications 1 et 2, caractérisées par le fait que l'on a utilisé un diisocyanate aliphatique et/ou cycloaliphatique.

4. Dispersions selon l'une des revendications 1 à 3, caractérisées par le fait que comme composé qui contient au moins deux groupes réagissant sur les groupes isocyanate et au moins un groupe capable de former un anion, on a utilisé un acide dihydroxycarboxylique ou un acide dihydroxysulfonique.

5. Dispersions selon l'une des revendications 1 à 3, caractérisées par le fait que comme composé qui contient au moins deux groupes réagissant sur les groupes isocyanate et au moins un groupe capable de former un anion, on a utilisé un acide diaminocarboxylique ou un acide diaminosulfonique.

6. Procédé pour la préparation de dispersions aqueuses à base d'une résine synthétique de polyuréthane, dans lequel on fait réagir un polyester à groupes hydroxyle sur un diisocyanate avec formation d'un premier produit intermédiaire et on fait ensuite réagir celui-ci sur un composé qui contient au moins deux groupes réagissant sur les groupes isocyanate et au moins un groupe capable de former un anion, et sur un agent d'allongement de chaîne, caractérisé par le fait que l'on fait réagir un polyester insaturé ou un mélange d'un polyester insaturé et d'un diol linéaire d'un poids moléculaire de 500 à 2000, le polyester ou le mélange contenant par 1000 unités de poids moléculaire au moins 0,4 double liaison à insaturation oléfinique, sur le diisocyanate, avec formation d'un premier produit intermédiaire présentant des groupes isocyanate terminaux, que l'on fait réagir celui-ci sur le composé qui contient au moins deux groupes réagissant sur les groupes isocyanate et au moins un groupe capable de former un anion, avec formation d'un deuxième produit intermédiaire présentant des groupes isocyanate terminaux, les groupes capables de former un anion ayant été neutralisés, avant la réaction, par une amine tertiaire, que l'on convertit le deuxième produit intermédiaire en une phase principalement aqueuse et que l'on fait réagir les groupes isocyanate du deuxième produit intermédiaire sur une di- et/ou polyamide à groupes amine primaires et/ou secondaires.

7. Procédé selon la revendication 6, caractérisé par le fait que comme polyester insaturé, on utilise un polyester tiré d'anhydride maléique et d'un diol.

8. Procédé selon l'une des revendications 6 et 7, caractérisé par le fait que l'on utilise un diisocyanate aliphatique ou cycloaliphatique.

9. Procédé selon l'une des revendications 6 à 8, caractérisé par le fait que comme composé qui contient au moins deux groupes réagissant sur les groupes isocyanate et au moins un groupe capable de former un anion, on utilise un acide dihydroxycarboxylique ou un acide dihydroxysulfonique.

10. Procédé selon l'une des revendications 6 à 8, caractérisé par le fait que comme composé qui contient au moins deux groupes réagissant sur les groupes isocyanate et au moins un groupe capable de former un anion, on utilise un acide diaminocarboxylique ou un acide diamiosulfonique.

11. Procédé pour la réalisation de revêtements par application d'une dispersion aqueuse à base d'une résine synthétique de polyuréthane qui à été obtenue par réaction d'un polyester à groupes hydroxyle sur un diisocyanate et ensuite réaction sur un composé qui contient au moins deux groupes réagissant sur les groupes isocyanate et au moins un groupe capable de former un anion, et sur un agent d'allongement de chaîne, sur un subjectile et ensuite par durcissement de la dispersion appliquée, caractérisé par le fait que la résine synthétique de polyuréthane a été obtenue par réaction d'un polyester insaturé ou d'un mélange d'un polyester insaturé et d'un diol linéaire d'un poids moléculaire de 500 à 2000, le polyester ou le mélange contenant par 1000 unités de poids moléculaire au moins 0,4 double liaison à insaturation oléfinique, sur le diisocyanate, avec formation d'un premier produit intermédiaire présentant des groupes isocyanate terminaux, réaction de ce produit intermédiaire sur le composé qui contient au moins deux groupes réagissant sur les groupes isocyanate et au moins un groupe capable de former un anion, avec formation d'un deuxième produit intermédiaire présentant des groupes isocyanate terminaux, les groupes capables de former un anion ayant été neutralisés, avant la réaction, par une amine tertiaire, conversion du deuxième produit intermédiaire en une phase principalement aqueuse et réaction des groupes isocyanate du deuxième produit intermédiaire sur une di- et/ou polyamine à groupes amine primaires et/ou secondaires.

12. Procédé selon la revendication 11, caractérisé par le fait que comme polyester insaturé, on a utilisé un polyester tiré d'anhydride maléique et d'un diol.

13. Procédé selon l'une des revendications 11 et 12, caractérisé par le fait que l'on a utilisé un diisocyanate aliphatique et/ou cycloaliphatique.

14. Procédé selon l'une des revendications 11 à 13, caractérisé par le fait que comme composé qui contient au moins deux groupes réagissant sur les groupes isocyanate et au moins un groupe capable de former un anion, on a utilisé un acide dihydroxycarboxylique ou un acide dihydroxysulfonique.

15. Procédé selon l'une des revendications 11 à 13, caractérisé par le fait que comme composé qui contient au moins deux groupes réagissant sur les groupes isocyanate et au moins un groupe capable de former un anion, on a utilisé un acide diaminocarboxylique ou un acide diaminosulfonique.